(19)

Europäisches
Patentamt
European
Patent Office
Office européen
des brevets

(11) **EP 2 133 831 B1**

(12) **EUROPEAN PATENT SPECIFICATION**

(45) Date of publication and mention
of the grant of the patent:
**09.06.2010 Bulletin 2010/23**

(51) Int Cl.:
***G06Q 10/00*** *(2006.01)*

(21) Application number: **08290542.3**

(22) Date of filing: **12.06.2008**

(54) **Security aspects of SOA**

Sicherheitsaspekte von SOA

Aspects de sécurité de SOA

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**16.12.2009 Bulletin 2009/51**

(73) Proprietor: **SAP AG**
**69190 Walldorf (DE)**

(72) Inventors:
• **Benameur, Azzedine**
**84330 Caromb (FR)**
• **Da Trindade, Joana**
**06410 Sophia Antipolis Biot (FR)**
• **El Khoury, Paul**
**06600 Antibes (FR)**

(74) Representative: **Müller-Boré & Partner**
**Patentanwälte**
**Grafinger Strasse 2**
**81671 München (DE)**

(56) References cited:
**US-A1- 2008 059 474     US-B1- 7 340 469**

• **SIMON R T ET AL: "Separation of duty in role-
based environments" COMPUTER SECURITY
FOUNDATIONS WORKSHOP, 1997.
PROCEEDINGS., 10TH ROCKPORT, MA, USA
10-12 JUNE 1997, LOS ALAMITOS, CA, USA,IEEE
COMPUT. SOC, US, 10 June 1997 (1997-06-10),
pages 183-194, XP010229306 ISBN:
978-0-8186-7990-2**
• **VIJAYANT DHANKHAR ET AL: "XACML Policies
for Exclusive Resource Usage" DATA AND
APPLICATIONS SECURITY XXI; [LECTURE
NOTES IN COMPUTER SCIENCE], SPRINGER
BERLIN HEIDELBERG, BERLIN, HEIDELBERG,
vol. 4602, 8 July 2007 (2007-07-08), pages
275-290, XP019065233 ISBN: 978-3-540-73533-5**

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

**Description**

Technical Field

The description is directed generally to security aspects of service oriented architectures (SOA) and in particular to a computer-implemented method, computer system, and computer program product for dynamic separation of duties (SoD) during workflow execution.

Background

Web services may relate to applications that publish their interfaces and remote calls over a network such as the Internet. Web services may be used in different architectures such as remote procedure call (RPC) and service oriented architecture (SOA). SOA is widely used for today's web services since SOA is (substantially) independent from an underlying implementation. In SOA, communication between web services may be realized through XML-based messages, in particular, SOAP messages.

Web services may be used to execute workflows. At least two different ways to make web services interact in order to execute workflows exist. Interacting web services may be composed (at runtime or design time), or orchestrated at design time when all actors are known. The latter is the most common way to use web services. This orchestration is describe in an orchestration language that can be executable such as BPEL or WS-CDL.

For security reasons or to be compliant with some regulation, a requirement to workflow execution by means of web services may be that tasks $T_n$ and $T_m$ (of a workflow) are not executed by the same person and/or the same machine. In particular, assigning one person to two different tasks of a workflow may let him execute fraudulent actions. Furthermore, due to the complex nature of web services and access controls that allows delegation of duties, it may be not possible to rely on a separation of duties at design time. Hence, for security reasons security of duties should be enforced at runtime.

Document US 7,340,469 B1 relates to an access and information flow control framework incorporating access and flow control policies with other functional requirements specification and analysis phases of a software development cycle.

Document US 2008/0059474 A1 relates to activity data analysis or evaluation to detect behavioural patterns and anomalies. When a behavioural pattern or an anomaly is detected, a system sends a notification or performs a particular task.

Summary

In one general aspect, a computer implemented method according to claim 1 for dynamic separation of duties (SoD) during (at runtime) workflow execution may comprise:

> based on at least one policy file, specifying at a monitoring module at least one node to be logged from a message (which relates to or determines or specifies at least one task of a workflow) in a message pipe of one or more messages exchanged when executing a workflow instance (i.e. during runtime execution of an instance of a workflow); passing information on the at least one logged node to an enforcer; checking (testing or verifying) SoD violation (SoD conflict) for the at least one logged node at the enforcer; and if for the at least one logged node SoD is violated (is not respect or a SoD conflict is detected), acting (which may in particular comprise taking an action) based on (according to) the at least one policy file.

A message pipe may be a list of one or more messages received at a web service and possibly stored and/or managed by a handler implementing message communication of the web service.

Separation of duty (SoD) required by a workflow is dynamically enforced when executing an instance of a workflow using a web service architecture without the need of a complementary access control mechanism. Rather, (substantially) all messages exchanged when executing a workflow instance using web services are captured and constraints are enforced on them according to at least one policy file. The exchanged messages are monitored by the monitoring module which filters and/or logs nodes of messages which may violate SoD. Detected nodes are sent to the enforcer which enforces constraints on the logged nodes when they violate SoD according to constraints specified in the policy file. Accordingly, with the policy file it is possible to select which nodes to log from a message and which action the enforcer should take of SoD was not respected. Consequently, no additional authorization model is required in order to ensure SoD. Hence, full flexibility of workflow execution using web services is maintained whereby SoD can be dynamically ensured. In order to enforce SoD only nodes of exchanged messages need to be monitored and possibly logged. No propagation through the whole workflow is necessary such that less traffic (comprising less message exchange) is necessary to ensure SoD in a more flexible manner. Furthermore, man-machine interaction is improved since a user of a workflow is no longer enforced to perform authentication and/or authorization when executing the workflow. Hence, security of workflow execution is increased whereby a user is not bothered with additional security aspects due to SoD. Furthermore, SoD requirements are also not part of the workflow itself such that SoD requirements can be easily changed and/or modified for a workflow without affecting workflow execution: Furthermore, even a modified and/or changed workflow may not violate SoD enforcement since the policy file may be handled and accessed independent from the workflow itself.

According to another aspect, the step of checking SoD violation may further comprise:

checking SoD violation by looking at history information of the workflow instance and verifying whether at least one logged node from one or more previous messages corresponding to the workflow instance relate to the same content as the at least one logged node.

According to the general aspect, the step of acting based on the at least one policy file may further comprise:

if a behavior of the at least one logged node is set to 'active', terminating execution of the workflow instance; and/or storing the at least one node for which SoD is violated in a log file and setting the behavior for the at least one node to 'passive' in the at least one policy file.

According to yet another aspect, the at least one node is logged using a space-separated pair comprising a namespace and a nodename.

Accordingly, the proposed mechanism does not need a complementary access control mechanism to enforce SoD dynamically. It just uses namespaces of target web services and a node of a message (which may correspond to a task of a workflow executed using web services) on which dynamic SoD must be ensured. The node may be specified by its nodename in the policy file. E.g. all nodes having nodename "username" may be determined in this way. By specifying a namespace and a nodename in a policy file specific nodes of a message which may violate SoD in a specific namespace (e.g. a URL address of the message), possible candidates for SoD violation may be easily and flexible specified and dynamically filtered and/or logged at runtime without to propagate SoD enforcement through the whole workflow.

SoD may be embedded at the workflow management system or workflow engine on the server side of a web service architecture. SoD integration is transparent and does not require any modification on the architecture (e.g. a web service implementation for executing workflows).

According to yet another aspect, the monitoring module and the enforcer are deployed in a workflow management system executing the workflow instance.

According to yet another aspect, the monitoring module is placed within a stack processing the message pipe as a handler.

According to yet another aspect, the monitoring module and the enforcer are placed on a server side of a distributed architecture.

In another general aspect there is provided a computer-program product comprising computer readable instructions, which when loaded and run in a computer system and/or computer network system, cause the computer system and/or the computer network system to perform a method as described.

In yet another general aspect, a computer system according to claim 8 for dynamic separation of duties (SoD) during workflow execution may comprise:

a monitoring module operable to
specify based on at least one policy file at least one node to be logged from a message in a message pipe of one or more messages exchanged when executing a workflow instance; and
to pass information on the at least one logged node to an enforcer;
the enforcer operable to
check SoD violation for the at least one logged node; and
act based on the at least one policy file, if for the at least one logged node SoD is violated.

According to yet another aspect, the system may be further operable to perform operations according to any one of the above methods.

The subject matter described in this specification can be implemented as a method or as a system or using computer program products, tangibly embodied in information carriers, such as a CD-ROM, a DVD-ROM, a semiconductor memory, and a hard disk. Such computer program products may cause a data processing apparatus to conduct one or more operations described in this specification.

In addition, the subject matter described in this specification can also be implemented as a system including a processor and a memory coupled to the processor. The memory may encode one or more programs that cause the processor to perform one or more of the method acts described in this specification. Further the subject matter described in this specification can be implemented using various MRI machines.

Details of one or more implementations are set forth in the accompanying exemplary drawings and exemplary description below. Other features will be apparent from the description and drawings, and from the claims.

Brief Description of the Drawings

Figure 1 shows a block diagram of an exemplary service oriented architecture (SOA).

Figure 2 shows an exemplary sequence of a scenario of a workflow.

Figure 3 shows a block diagram of an exemplary architecture of a dynamic separation of duties (DSoD).

Figure 4 shows a flow diagram of exemplary interactions between dynamic separation of duties (DSoD) agents and a workflow (WF) engine.

Figure 5 shows an exemplary specification/implementation of a dynamic separation of duties (DSoD) policy.

Figure 6 shows and exemplary specification/implementation of a request SOAP message.

Figure 7 shows and exemplary specification/implementation of a storage SOAP message.

Figure 8 shows a block diagram of an exemplary Axis2 execution model.

Figure 9 shows an exemplary configuration file for Axis2 to engage a secure logging module.

Figure 10 shows an exemplary implementation of a secure log handler.

Figure 11 shows an exemplary implementation of a secure logging module.

Figure 12 shows a block diagram of an exemplary computer network system.

Technical Terms

Following technical terms are widely used throughout the description. The terms may refer to but are not limited to the subsequently given explanations.

*Service oriented architecture (SOA):*

Service Oriented Architecture (SOA) may be a computer system's architectural style or structure for creating and using processes, packaged as services through their lifecycle. SOA may define and provision at an IT infrastructure to allow different applications (e.g. computer programs, (web) services, etc.) to exchange data and/or information and participate in processes. These functions may be loosely coupled with one or more operation systems and/or programming languages underlying the applications. SOA may separate functions into different and/or distinct units (that may be referred to as services), which may distributed over a network (e.g. the Internet) and may be combined and (at least partly) reused to create applications. The services may communicate with each other by passing data and/or information from one service to another service and/or by coordinating an activity between two or more services.

*Web service:*

According to a definition of the W3C (the World Wide Web Consortium) a web service may be "a software system designed to support interoperable machine to machine interaction over a network". This definition may encompass a plurality of different systems. In common usage, the term may refer to clients and servers that communicate using XML-based messages following the SOAP standard. In such systems, often machine-readable descriptions of operations offered by a service written in WSDL (Web Services Description Language) may be foreseen. The use of WSDL is however not required by SOAP.

*Workflow:*

A workflow may be a computer-based specification of a sequence of operations or tasks to be performed by a person, a group of persons, and/or a machine (e.g. a computer or computer network). In general, a workflow may be a pattern of activity enabled by a systematic organization of resources, defined roles and mass, energy and information flows, into a work process that can be documented and learned through a machine. A workflow may be described using formal and/or informal flow diagramming techniques showing direct flows between processing steps. Processing steps or components of a workflow may be basically defined by at least three parameters: input description, transformation rules, and output description. The input information may comprise information, material and/or energy required to complete a step (or task in a workflow). The transformation rules may comprise algorithms which may be carried out by associated human roles, machines (computers), and/or a combination thereof. The output descriptions may comprise information, material, and/or energy produced by a step (or task) of a workflow and provided as input to downstream steps (or tasks). A workflow may be defined as follows:

$$WF = \sum_{1}^{n}\{T_1, T_2, ..., T_n\}$$

wherein WF denotes a workflow, and $T_i, i \in 1,...,n$ denotes a task. $T_i$ may comprise one or more sub-tasks $t_i, i \in 1,...,m$, that may also define at least one workflow. Tasks having sub-tasks may be the case for distributed workflows.

*Policy:*

A policy may be specified in a modeling and/or programming language for computer systems (e.g. according to the Web Services Policy specified at the W3C). A policy may comprise one or more rules specifying conditions and/or requirements which must be fulfilled by an application program and/or service. Policies may be used in web services to specify authorization and/or authentication requirements of an application.

*Separation of duties (SoD):*

Separation of duties (SoD) may relate to a concept of having more than one person, application program, and/or resource to complete a task specified in a workflow. In computing, SoD may be considered as a fraud prevention mechanism. By dividing tasks and/or privileges (e.g. as specified in workflow) between users and/or machines operating and/or processing the tasks, SoD may ensure that a user alone may not violate security principles of a system. Several known SoD approaches may be based on computer-implemented Role-Based Access Control (RBAC) models which may define a set of mutually exclusive roles, each role associated to a set of privileges. In RBAC models, a user may be then assigned to a role, which grants him the corresponding privileges. In a workflow context, privileges may represent workflow tasks that a user with the correspondent role is authorized to perform. SoD approaches for workflows may be classified into two main categories: *static SoD* and *dynamic SoD.*

Static SoD approaches may not keep context information. For instance, a user assigned to role "X" is always authorized to perform any tasks associated to role "X". Consequently, with static SoD it may be not possible to cover delegation and runtime aspects of a workflow. Such a requirement may be satisfied or achieved by enforcing dynamic SoD. In workflows, the principle of dynamic SoD may ensure that sensible workflow tasks are performed by different users and/or machines, based on available context information.

Dynamic SoD approaches may be further classified into three main categories: *object-based, operational,* and *history-based.* This classification may consider a type of context information in which a decision for duty separation may be based. Object-based dynamic SoD may allow a user to perform a sensible task only if he has not previously performed another type of sensible task on the same object during the workflow.

Detailed Description

In the following, a detailed description of examples will be given with reference to the drawings. It should be understood that various modifications to the examples may be made. In particular, elements of one example may be combined and used in other examples to form new examples.

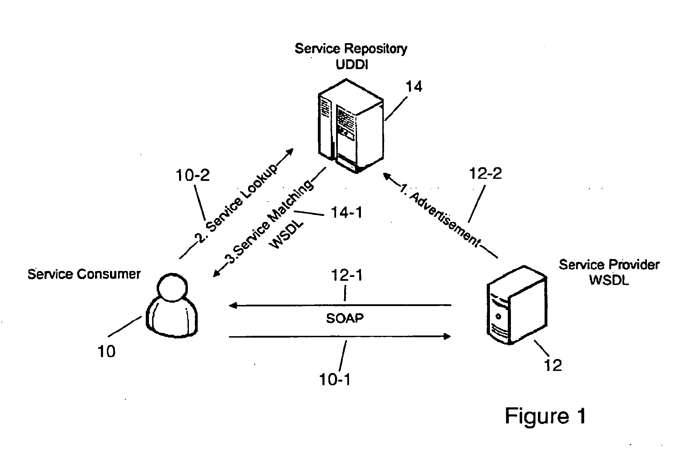

**Figure 1** shows an exemplary specification for web services using a Service Oriented Architecture (SOA). Web services are applications that publish their interfaces and allow remote calls over the network. The interfaces available are published in one or more files e.g. using the Web Specification Description Language (WSDL). Instead of being based on SOA, web services may be used in other architectures such as Remote Procedure Call (RPC). However, today's industry standard is SOA web services. SOA-based web services may have the advantage of being independent from an underlying implementation. In SOA web services communication between services through their interfaces is performed through SOAP messages, which are XML-based.

In the exemplary SOA-based web services shown in Fig. 1, network nodes 10, 12, 14 may communication with each other as follows:

A network node (e.g. a client) 10 sends a request message 10-1 to another network node (e.g. a server or a service provider) 12, which sends a corresponding response message 12-1 back to the client upon computation of the client request at the server 12. In one exemplary implementation, SOA web services are implemented wherein request and response messages are SOAP messages. SOAP is a protocol for exchanging XML-based messages over computer networks (e.g. the Internet), e.g. using HTTP and/or HTTPS. One or more web services hosted at the service provider 12 are exemplary specified and/or described using the Web Services Description Language (WSDL).

In one example, the service provider 12 would like to publish its at least one service. The service provider 12 therefore sends a message 12-2 to a service repository 14 which provides a repository listing and/or storing publications of web services, i.e. the service repository 14 may store lists or tables of web services which are available over a network comprising e.g. a description of available web services, conditions for accessing the web services, and/or applications for the web services. The service repository 14 may for example publish service listings and discovery of such services and how such services may interact over a network using the Universal Description, Discovery and Integration (UDDI) registry, which is XML-based. The client 10, can then lookup 10-2 a service e.g. for a particular request at the service repository 14 which response 14-1 to the client 10 with one or more web services (e.g. service 12) matching the request 10-2.

In one example, (SOA) web services are combined to execute at least one workflow. For this purpose, web services can be composed (at runtime or design time), or orchestrated at design time when all actors are known. Web services orchestration may be described in an executable language for orchestrating web services to execute workflows, e.g. the web services Business Process Execution Language (BPEL). BPEL is a language for specifying process behavior as e.g. specified and/or modeled in one or more workflows based on web services (i.e. web services are used to execute the workflows), wherein processes (e.g. workflows) specified in BPEL export and import functionality using web service interfaces only or exclusively. Hence, to execute at least one workflow using a workflow engine (e.g. a BPEL engine) on top of a SOA web service implementation one or more messages (in particular SOAP messages) are sent to and from the web service according to one or more tasks to be executed according to an underlying workflow.

A general principle of Service Oriented Architecture (SOA) as exemplary described with reference to Fig. 1 and its execution environment within a workflow engine may arise new security issues and/or aspects when executing one or more instances of at least one workflow (using SOA web services) at least due to SOA's distributed nature.

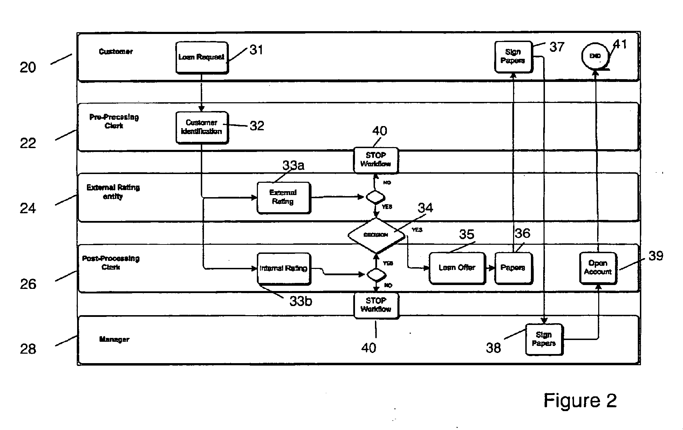

**Figure 2** shows an exemplary workflow 30 which may be executed by web services e.g. using the architecture shown in Fig. 1. In a banking workflow 30 as shown in Fig. 2 which can be executed using the (SOA) web service architecture shown in Fig. 2, a customer 20 asks for a loan by performing a loan request 31. A first user, e.g. a pre-processing clerk 22 creates the loan request comprising an identification 32 of the customer 20. In order to compliant the workflow 30 with basic banking regulations (e.g. Sarbanes & Oxley), a second user, e.g. a post processing clerk 26 should accept the loan request 31 and then an internal ranking 33b and an external ranking 33a will be computed, wherein the first user 22 and the second user 26 should be different from each other due to security reasons. The internal ranking 33b may be computed by the second user 26, while the external ranking 33a may be computed by an external rating entity 24. Based on a decision 34 on the external ranking 33a and the internal ranking 33b, a loan offer 35 and corresponding papers 36 are determined by the second user 26 and the papers 36 are signed 37 by the customer 20; otherwise the workflow 30 is stopped 40. Finally a manager 28 (e.g. of the bank) will give his approval 38 or not based on which the second user 26 opens an account 39 for the customer 20 and the workflow terminates 41. The different steps 31, 32, 33a, 33b, 34, 35, 36, 37, 38, 39, 40, 41 of the workflow 30 may be referred to as tasks and may be executed using SOA web services through message exchange.

When executing an instance of the workflow 30 shown in Fig. 2 using web services as specified in an architecture as shown in Fig. 1, separation of duty (SoD) should be enforced. To enforce SoD dynamically or at runtime (i.e. when or during an instance of the workflow 30 is executed by web services), it should be ensured that a user 22 (e.g. a bank employee), which is referred to as pre-processing clerk 22, that creates the loan request (e.g. by performing task 32) is not the same user, who accepts the loan request, which is referred to as post processing clerk 26. Hence, users 22 and 26 should be different persons in order to ensure SoD when executing an instance of the workflow 30 using web services.

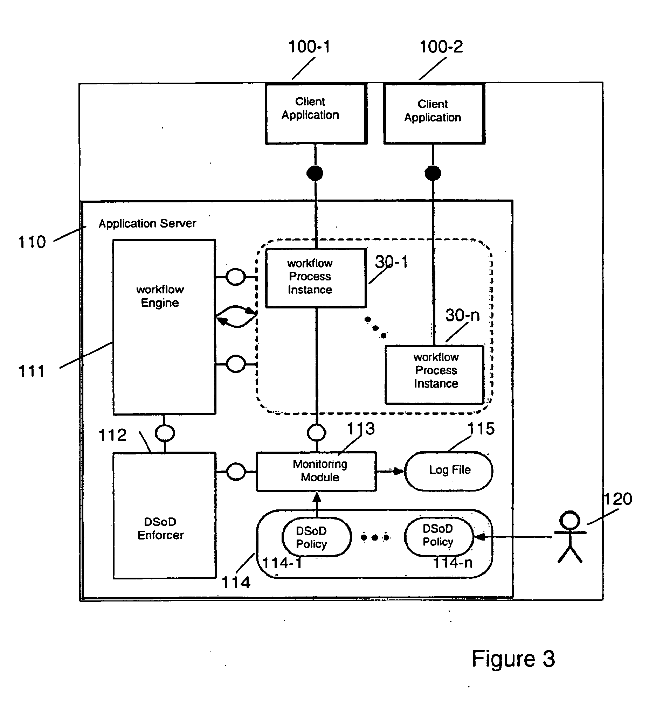

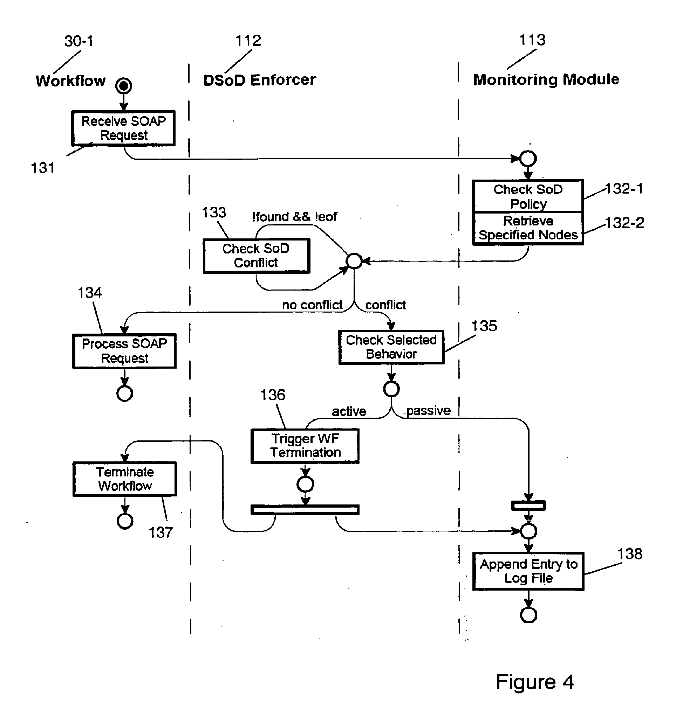

A solution of dynamic SoD for one or more workflows (e.g. workflow 30) executed using web services is shown with references to **Figures 3 and 4.**

To achieve dynamic SoD, a way to capture (substantially) all messages (e.g. SOAP messages) exchanged when executing an instance 30-1, 30-n of a workflow 30 using web services (e.g. SOA web services) is required or needed to be able to enforce constraints on the SOAP messages.

**Figure 3** shows an exemplary computer network-based architecture for enforcing dynamic SoD which may capture (substantially) all messages exchanged when executing a workflow instance 30-1, 30-n. The shown mechanism details an exemplary logical implementation of a solution to dynamic SoD as required for workflow execution using web services and in particular SOA web services. Software components are therefore integrated to the server side of a distributed architecture (e.g. SOA) e.g. on an application server 110 comprising a workflow engine 111. In one exemplary implementation, a BPEL workflow engine 111 may be implemented on top of an Axis web service stack.

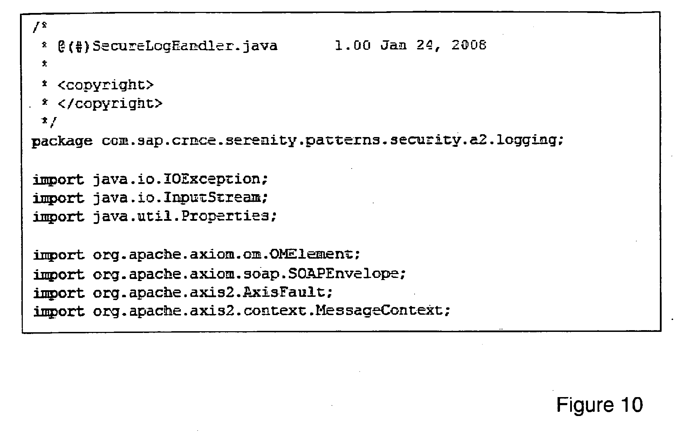

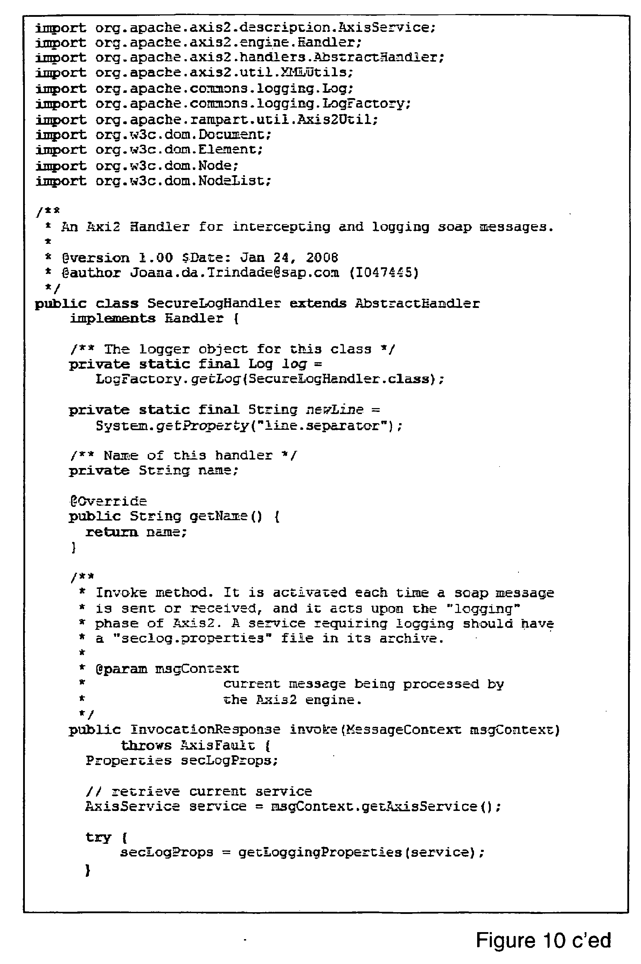

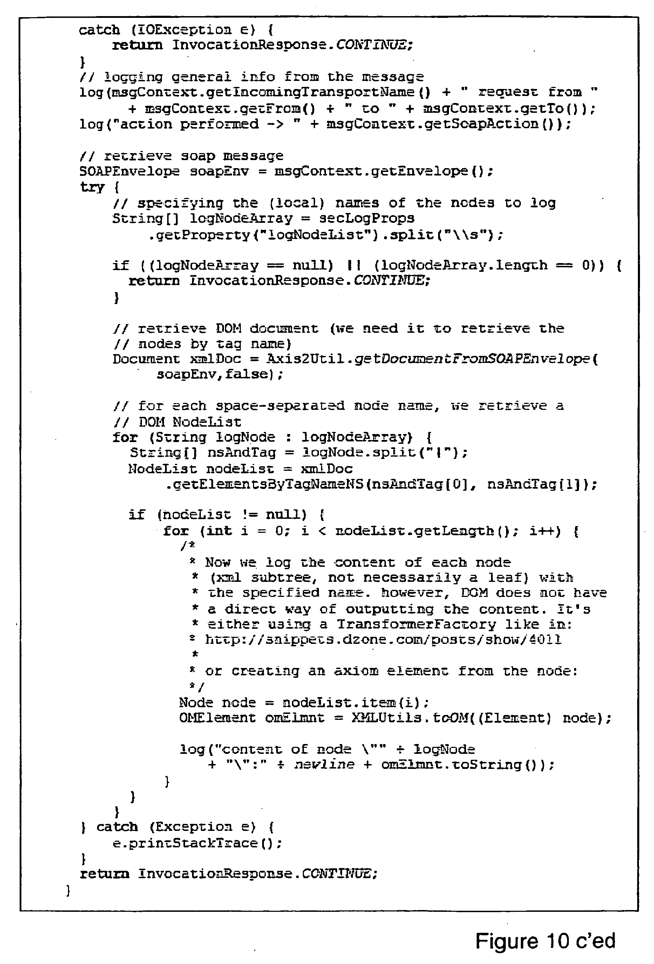

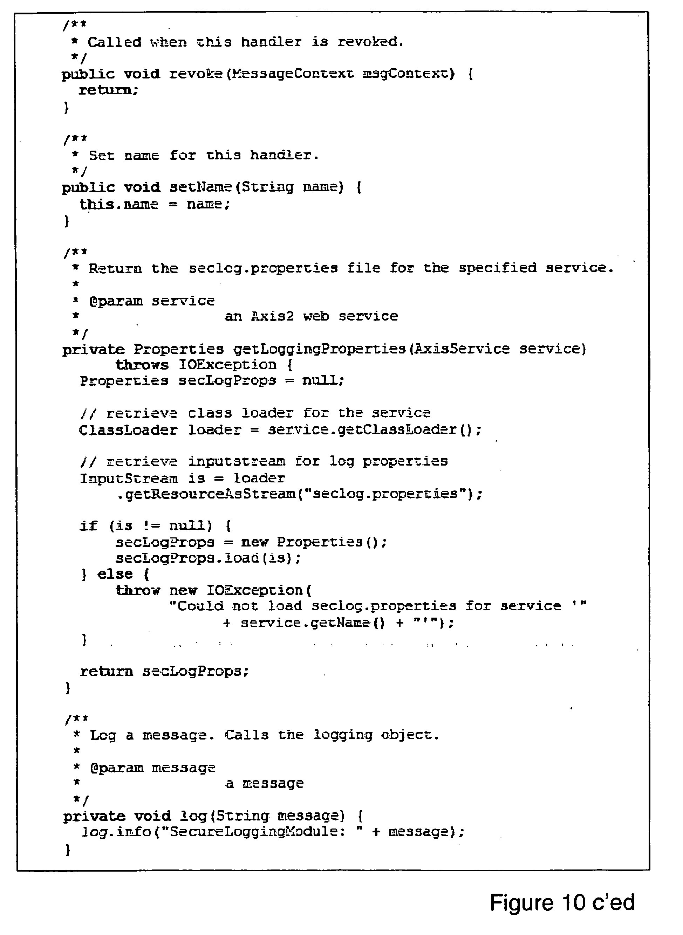

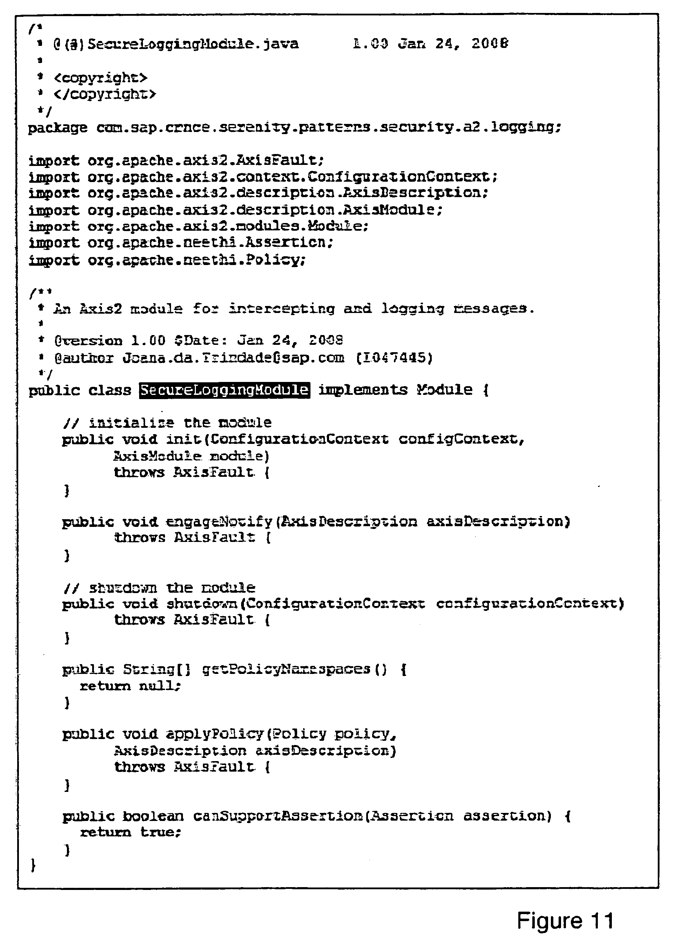

Basically, the architecture shown in Fig. 3 comprises a server or application server 110 hosting at least one web service. One or more clients or client applications 100-1 and 100-2 may access the server 110 and/or may perform requests against the server 110. The server 110 comprises a workflow management system or (workflow) engine 111 implemented on top of a web service on the server 110. The web service may be implemented through a message stack such that the workflow engine 111 may be implemented on top of the stack. The workflow engine 111 is operable to execute one or more workflow instances 30-1, 30-n of a workflow 30. A monitoring module or component 113 and a (dynamic) SoD enforcer or enforcing module or component 114 are implemented on the server 110 and deployed in the workflow engine 111. In one exemplary implementation, the monitoring module 113 is placed within a message processing stack (e.g. for processing SOAP messages) of the server 110 and is implemented as a handler. An exemplary implementation of the monitoring module handler is shown in Figures 10 and 11.

At least one policy (specification) file 114-1, 114-n specifies a policy comprising specifications on one or more nodes from messages which need to be monitored and/or logged e.g. in a log file 115 in order to enforce SoD dynamically. The messages are exchanged in accordance with execution of at least one instance 30-1, 30-n of a workflow 30 in the system shown in Fig. 3.

Hence, using the policy file 114-1, 114-n, which specifies one or more nodes of messages that may violate SoD when executing a workflow 30, it becomes possible to select only those nodes form exchanged messages dynamically by monitoring exchanged messages and logging only respective nodes which may not respect SoD using the monitoring module 113. Consequently, no additional authorization model is needed in association with the workflow engine 111 in order to enforce SoD dynamically. Hence, flexibility of dynamic SoD is increased since only respective nodes which might violate or not respect SoD should be monitored. Furthermore, no additional no propagation of SoD through the whole system (e.g. through all tasks of an executed workflow) is required. In this way flexibility of workflow execution using web services and dynamic SoD is achieved, wherein less network traffic is required, i.e. no additional messages need to be exchanged during workflow execution.

In one example, nodes that need to be logged represent a (possible) violation of SoD, e.g. if they have the same content. Such a condition of possibly violating nodes may be specified in a policy file 114-1, 114-n. Furthermore, the policy file 114-1, 114-n specifies which action should be performed on at least one node of at least one message for which SoD could be violated or not respected. Those actions are performed by the enforcer 112 who receives from the monitoring module 113 information and/or data on one or more nodes of at least one message which may violate or not respect SoD. The actions may comprise terminating a corresponding execution of an instance 30-1, 30-n of a workflow 30 executed in web service 110 through exchange of messages, e.g. SOAP messages and/or failing to respond a service request e.g. sent from a client 100-1, 100-2. In one exemplary implementation, termination of execution of the workflow instance 30-1, 30-n is performed by the enforcer 112 if a behavior of the corresponding node is set to 'active' in the corresponding policy file 114-1, 114-n. An other action performed by the enforcer 112 in reaction to a detected node which violates SoD is to set an attribute 'passive' in the policy file 114-1, 114-n for the respective node.

The policy files 114-1, 114-n used by the monitoring module 113 and the enforcer 112 may be stored in a data storage device, e.g. a policy database 114. The policy files 114-1, 114-n may be specified by a user, e.g. a system designer 120 determining SoD requirements of workflows 30 executed in the system shown in Fig. 3.

By implementing dynamic enforcement of SoD in the web service architecture as shown in Fig. 3, no complementary access control mechanism to enforce SoD dynamically (i.e. at runtime when executing a workflow instance 30-1, 30-n) is required. By implementing the monitoring module 113 and the enforcer 112 which operate on one or more SoD policies 114-1, 114-n specifying which nodes of messages exchanged when executing an instance 30-1, 30-n of a workflow 30, merely one or more namespaces of one or more target web services 110 and at least one node (of a message exchanged in response to task execution of the instance 30-1, 30-n) on which SoD should be ensured and/or enforced are required. The components 112, 113, 114, and/or 115 are embedded at a workflow management system or workflow engine 111, and it's integration is transparent and does not require any modification on an underlying architecture used to execute workflows 30.

**Figure 4** shows an exemplary flow diagram of interactions between a dynamic SoD enforcer 112 and a workflow engine 111 when executing a workflow instance 30-1.

The workflow engine 111 receives a message request 113 in accordance with the workflow instance 30-1 e.g.

of workflow 30 to be executed e.g. using the system shown in Fig. 3. The monitoring module 113 monitoring message exchange checks 132-1 at least one SoD policy 114-1, 114-n for one or more nodes comprised in the message request and retrieve 132-2 one or more nodes for the message request which are specified according to the policy file 114-1, 114-n and which thus may violate and/or not respect SoD for the executed workflow instance 30-1. The enforcer 112 receives the one or more specified nodes from the monitoring module 113 and checks 133 for each of the one or more nodes a (possible) SoD conflict. An exemplary SoD conflict may be that two nodes are executable by the same machine and/or person which is however not allowed according to the workflow 30 and/or that at least two nodes have the same content. If no conflict is detected for any of the one or more nodes of the message request, the request is processed 134 according to the workflow instance 30-1 at the workflow engine 111. Otherwise, if a conflict for at least one (violating) node of the one or more nodes is detected by the enforcer 112, a selected behavior for the at least one node, e.g. specified according to the underlying policy file 114-1, 114-n is checked 135 by the enforcer 112. Depending on whether the at least on node for which a conflict is detected is set to 'active' or 'passive' in the corresponding policy file 114-1, 114-n, a termination of execution of the workflow instance 30-1 is triggered 136 by the enforcer 112 and the workflow instance 30-1 is terminated 137 by the workflow engine 111 if the at least one node is set to 'active'. Otherwise, if the at least one node is set to 'passive', the monitoring module 113 receives information on the at least one node from the enforcer 112 and append 138 a corresponding entry in a log file 115 for the at least one node.

In other words, based on at least one policy file 114-1, 114-n in place (i.e. a policy file 114-1, 114-n which is used when executing a workflow instance 30-1 using the workflow engine 111), the monitoring module 113 retrieves and/or checks 132-1, 132-2 which one or more nodes to log from a (current) message in the pipe of a handler chain, which may be used to implement the server 110. The message is exchanged in accordance with a task of the underlying workflow 30 to be executed. This information is passed to the enforcer 112. The enforcer 112 checks 133 the existence of a SoD violation for the one or more logged nodes e.g. by looking at history information of the instance 30-1 of the workflow 30. For example, the enforcer 112 then verifies whether one or more logged nodes from previous messages from the (substantially) same workflow instance 30-1 present (at least part of) the (exact) same content. If yes, this may be considered violation of SoD, and the enforcer acts 135, 136, 138 according to a behavior specified for each of the one or more logged nodes in the policy file 114-1, 114-n.

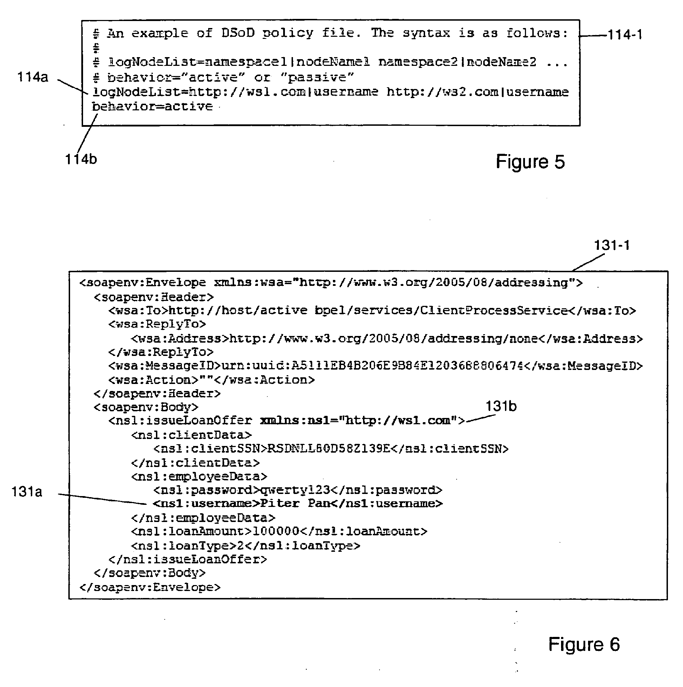

**Figure 5** shows an exemplary policy file 114-1, which may be used in the system and method as described with reference to Figs. 3 and 4. The policy file 114-1 may be defined and/or specified using an XML-based syntax comprising definitions for a node list 114a of one or more logged nodes from one or more messages of an executed workflow instance 30-1 and an attribute "behavior" 114b denoting and/or assigning an activity status (e.g. 'active' and 'passive') to each of the one or more logged nodes. A message may correspond to a task of a workflow 30.

The node list 114a comprises a set of (space-separated) pairs of a namespace and a nodename for each of one or more nodes logged e.g. in the log file 115 of at least one message of at least one executed workflow instance 30-1. The namespace element specifies a location of the corresponding logged node, e.g. a URL or a URI specified using XML namespaces (cf. W3C specification for XML namespaces). The nodename element specifies a name of the corresponding logged node.

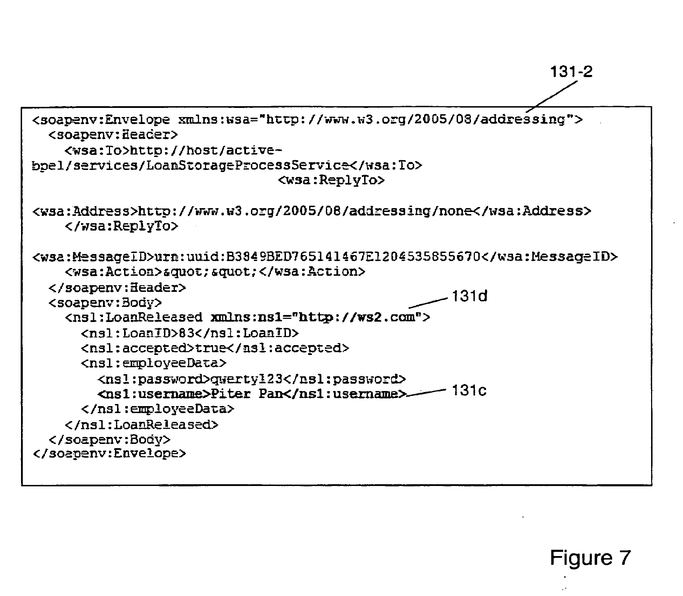

For example, considering the workflow 30 of Fig. 2 executed in the computer system and using the computer-implemented method according to Figs. 3 and 4. According to the policy file 114-1 shown in Fig. 5, the monitoring module 113 is obliged to log the contents of node "username" under the namespaces "http://ws1.com" and "http://ws2.com". Since namespaces in the node list 114a are defined in terms of a web service, using namespaces provides an adequate way to identify the destination of a message. According to the given example in Fig. 5, this means that content "username"-nodes (i.e. nodes of element "username") from all incoming messages directed to namespaces "http://ws1.com" and "http://ws2.com" are logged. Exemplary SOAP messages for a loan request message 131-1 and a loan approval message 131-2 of the workflow 30 shown in Fig. 2 are shown in **Figures 6 and 7,** respectively. The loan request message 131-1 may correspond to task 32 and the loan approval message may correspond to task 35 of the workflow 30 when executed using web services.

In the loan request message 131-1, a node having element name "username" 131 a (i.e. XML-based SOAP node <ns1:username> ... </ ns1:username>) comprises the content "Piter Pan". Processing this message when a workflow instance 30-1 of the workflow 30 is executed and/or processed in the web services system of Fig. 3 using the computer-implemented method of Fig. 4, the monitoring module 113 logs the content (i.e. "Piter Pan") of the node 131 a according to the underlying policy file 114-1 possibly with additional information about the request 131-1, e.g. transport protocol, from, to, etc.. For example, the monitoring module 113 may output a request (e.g. http://localhost/something) to http://host/active bpel/services/ClientProcessService, e.g. the URL of a web service on server 110. Furthermore, the monitoring module 113 may output the node 131a to be logged (e.g. "<ns1:usemame>Piter Pan</ns1:username>") to the log file 115 of the workflow engine 111. Subsequently, a second message 131-2 (e.g. a loan storage message) may be received at the monitoring module 113 e.g. under the http://ws2.com namespace. The second message 131-2 is logged in the log file 115 by the monitoring module 113 by logging a pair comprising a namespace "http://ws2.com" 131d and a username as specified in the username node 131c according to the policy 114-1. Accordingly, the pair (http:

//ws2.com, "Piter Pan") is logged in accordance with the policy 114-1 possibly with additional information about the request 131-2, e.g. transport protocol, from, to, etc.. After the logging process, the enforcer 112 checks if the content of this second username node 131c is the same for any other nodes specified in the policy file 114-1, for the same workflow instance 30-1. According to the example shown with reference to Figs. 5 to 7 for a workflow instance 30-1 of the workflow 30 this is true for the loan request message 131-1 and the loan approval message 131-2, i.e. for both requests the content of node username is "Peter Pan" which is logged in the log file 115 according to the policy file 114-1. As previously specified for the workflow 30 of Fig. 2, different requests having the same username may violate SoD. According to some requirements of the workflow 30, a loan request 131-1 and a loan storage request 131-2 may not be performed by the same user. This SoD conflict is detected by the enforcer 112 for messages 131-1 and 131-2 which then checks a selected behavior 114b for the logged nodes 131 a and 131 c according to the policy file 114-1. Since in this example the behavior 114b is set to 'active', the enforcer 112 triggers the termination of the workflow instance 30-1. Termination is then performed through the workflow engine 111.

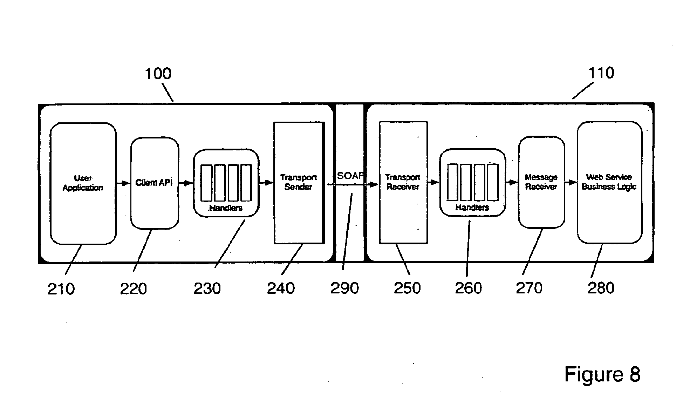

With reference to **Figure 8,** an exemplary implementation of dynamic SoD in workflow execution using a distributed architecture comprising the additional components 112, 113, 114, 115 according to Figs. 3 and 4 is shown using the Axis SOAP processing or execution model.

Axis is an XML-based framework for implementing SOA web services comprising both a Java and a C++ implementation of a SOAP server and a plurality of utilities and APIs for generating and deploying web service applications. Axis is developed under the auspices of the Apache Software Foundation. An example architecture of the Axis execution model in shown in Fig. 8. The client side 100 of the Axis execution model comprises at least one user application 210, at least one API 220 for the client 100, one or more handlers 230, and a transport sender 240, wherein communication through the components 210, 220, 230, 240 comprised in the client 100 is performed according to the direction of the arrows shown in Fig. 8, e.g. a request message is formulated in the user application 210, computed through the client API 220 and one or more handlers 230, and finally sent from the transport sender 240, which communicates with a transport receiver 250 located on the server side 110, to the server 110. Using an Axis implementation of SOA web services, messages 290 exchanged between the client 100 and the server 110 are SOAP messages 290. The server 110 comprises the transport receiver 250, one or more handlers 260, at least one message receiver 270, and a web service logic 280, wherein communication through the components 250, 260, 270, 280 comprised in the server 110 is performed according to the direction of the arrows shown in Fig. 8. For example, a request 290 from the client 100 received at the transport receiver 250 is processed and/or computed through the handlers 260, the message receiver 270, and the web service logic 280 in order to compute a response to the client request 290. The handlers 230, 260 may be implemented as stacks using a FIFO (first in first out) and/or LIFO (last in first out) principle.

In other words, the Axis SOAP processing model is based on a pipe of sequential actions performed by so-called handlers. Examples of these actions may be message routing, security headers processing (comprising e.g. XML encryption, XML signature, etc.), and message dispatching.

In one exemplary implementation, the Axis execution model of Fig. 8 is used to implement the architecture of Fig. 3 for dynamic enforcement of DoS during runtime execution of workflows together with an Axis-based workflow engine 111 on top of an Axis web services stack. Using an Axis-based workflow engine 111, messages (SOAP messages) need to be captured in the Axis stack or SOAP processing model.

In order to allow for dynamic SoD, SOAP processing using the Axis processing model may be extended by placing customized handlers in the message processing chain of Fig. 8. These handlers can be invoked by the Axis engine, and act upon at least one current SOAP message in the pipe of the Axis processing model.

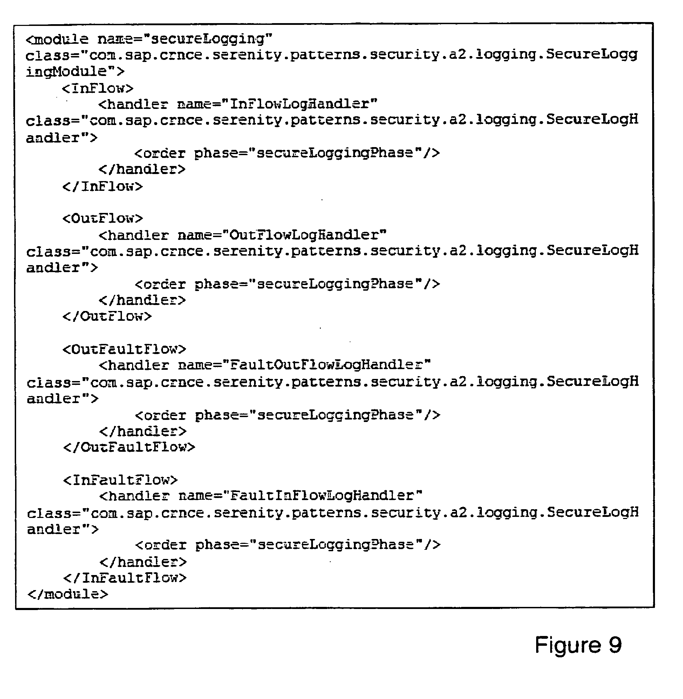

In the exemplary implementation using the Axis processing model of Fig. 8, the monitoring module 113 may be implemented as a handler, and placed on the server side 110 of the Axis handler chain. **Figures 9 to 11** show an exemplary implementation of the handlers in particular of an exemplary implementation of the monitoring module 113 for intercepting and/or logging messages exchanged when executing a workflow instance 301, 30-n.

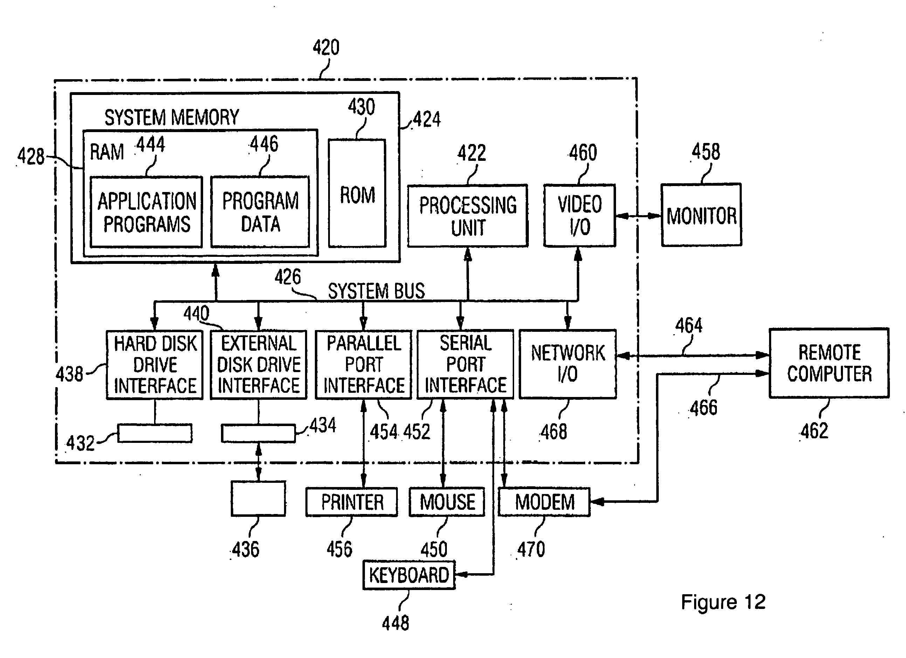

With reference to **Figure 12,** an exemplary system for implementing the invention includes a general purpose computing device in the form of a conventional computing environment 420 (e.g. personal computer), including a processing unit 422, a system memory 424, and a system bus 426, that couples various system components including the system memory 424 to the processing unit 422. The processing unit 422 may perform arithmetic, logic and/or control operations by accessing system memory 424. The system memory 424 may store information and/or instructions for use in combination with processing unit 422. The system memory 424 may include volatile and non-volatile memory, such as random access memory (RAM) 428 and read only memory (ROM) 430. A basic input/output system (BIOS) containing the basic routines that helps to transfer information between elements within the personal computer 420, such as during start-up, may be stored in ROM 430. The system bus 426 may be any of several types of bus structures including a memory bus or memory controller, a peripheral bus, and a local bus using any of a variety of bus architectures.

The personal computer 420 may further include a hard disk drive 432 for reading from and writing to a hard disk (not shown), and an external disk drive 434 for reading from or writing to a removable disk 436. The removable disk may be a magnetic disk for a magnetic disk driver or an optical disk such as a CD ROM for an optical disk drive. The hard disk drive 434 and external disk drive 434 are connected to the system bus 426 by a hard disk drive interface 438 and an external disk drive interface 440, respectively. The drives and their associated computer-readable media provide nonvolatile storage of computer readable instructions, data structures, program modules and other data for the personal computer 420. The data structures may include relevant data of the implementation of the method for dynamic separation of duties (SoD) during workflow execution, as described in more details below. The relevant data may be organized in a database, for example a relational or object database.

Although the exemplary environment described herein employs a hard disk (not shown) and an external disk, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk, ROM 430 or RAM 428, including an operating system (not shown), one or more application programs, other program modules (not shown), and program data. The application programs may include at least a part of the functionality as detailed in Figs. 1 to 11.

A user may enter commands and information, as discussed below, into the personal computer 420 through input devices such as keyboard 448 and mouse 450. Other input devices (not shown) may include a microphone (or other sensors), joystick, game pad, scanner, or the like. These and other input devices may be connected to the processing unit 422 through a serial port interface 452 that is coupled to the system bus 426, or may be collected by other interfaces, such as a parallel port interface 454, game port or a universal serial bus (USB). Further, information may be printed using printer 456. The printer 456, and other parallel input/output devices may be connected to the processing unit 422 through parallel port interface 454. A monitor 58 or other type of display device is also connected to the system bus 26 via an interface, such as a video input/output 460. In addition to the monitor, computing environment 420 may include other peripheral output devices (not shown), such as speakers or other audible output.

The computing environment 420 may communicate with other electronic devices such as a computer, telephone (wired or wireless), personal digital assistant, television, or the like. To communicate, the computer environment 420 may operate in a networked environment using connections to one or more electronic devices. Fig. 12 depicts the computer environment networked with remote computer 462. The remote computer 462 may be another computing environment such as a server, a router, a network PC, a peer device or other common network node, and may include many or all of the elements described above relative to the computing environment 420. The logical connections depicted in Fig. 12 include a local area network (LAN) 464 and a wide area network (WAN) 466. Such networking environments are commonplace in offices, enterprise-wide computer networks, intranets and the Internet.

When used in a LAN networking environment, the computing environment 420 may be connected to the LAN 464 through a network I/O 468. When used in a WAN networking environment, the computing environment 420 may include a modem 470 or other means for establishing communications over the WAN 466. The modem 470, which may be internal or external to computing environment 420, is connected to the system bus 426 via the serial port interface 452. In a networked environment, program modules depicted relative to the computing environment 420, or portions thereof, may be stored in a remote memory storage device resident on or accessible to remote computer 462. Furthermore other data relevant to the application of the insurance claim management evaluation method (described in more detail further below) may be resident on or accessible via the remote computer 462. The data may be stored for example in an object or a relation database. It will be appreciated that the network connections shown are exemplary and other means of establishing a communications link between the electronic devices may be used.

The above-described computing system is only one example of the type of computing system that may be used to implement the method for dynamic separation of duties (SoD) during workflow execution.

**List of Reference Numerals**

| | |
|---|---|
| 10 | client |
| 12 | server |
| 14 | repository |
| 10-1 | request message |
| 12-1 | response message |
| 12-2 | registration message |

| | |
|---|---|
| 10-2 | service lookup message |
| 14-1 | service matching response message |
| 30 | workflow |
| 20, 22, 24, 26, 28 | workflow operator |
| 31, 32,33a, 33b, 34, 35, 36, 37, 38, 39, 40, 41 | workflow task |
| 30-1, 30-n | workflow instance |
| 100-1, 100-2 | client |
| 110 | server |
| 111 | workflow engine |
| 112 | enforcer component |
| 113 | monitoring module |
| 114 | policy database |
| 114-1, 114-n | policy file |
| 114a | node list |
| 114b | behavior |
| 115 | log file |
| 120 | user |
| 131, 132, 133, 134, 135, 136, 137, 138 | interaction between enforcer, monitoring module, and/or workflow engine |
| 131-1, 131-2 | request message |
| 131a, 131b, 131c, 131d | node |
| 210 | application |
| 220 | client API |
| 230, 260 | handler |
| 240 | transport sender |
| 250 | transport receiver |
| 270 | message receiver |
| 280 | web service logic |
| 420 | conventional computing environment |
| 422 | processing unit |

| 424 | system memory |
| 426 | system bus |
| 428 | random access memory (RAM) |
| 430 | read only memory (ROM) |
| 432 | hard disk drive |
| 434 | external disk drive |
| 436 | removable disk |
| 438 | hard disk drive interface |
| 440 | external disk drive interface |
| 448 | keyboard |
| 450 | mouse |
| 452 | serial port interface |
| 454 | parallel port interface |
| 456 | printer |
| 458 | monitor |
| 460 | video input/output |
| 462 | remote computer |
| 464 | local area network (LAN) |
| 466 | wide area network (WAN) |
| 468 | network I/O |
| 470 | a modem |

**Claims**

1. Computer implemented method for dynamic separation of duties (SoD) during workflow execution, which ensures that workflow tasks are performed by different users based on available context information, the method comprising:

based on at least one policy file (114-1, 114-n), specifying at a monitoring module (113) at least one node (131c) to be logged from a message (131-2) in a message pipe of one or more messages exchanged when executing a workflow instance (30-1, 30-n), wherein the at least one logged node (131c) is specified in the policy file (114-1, 114-n) as possibly violating SoD;
passing information on the at least one logged node (131c) to an enforcer (112);
checking SoD violation for the at least one logged node (131c) at the enforcer (112);
if for the at least one logged node (131c) SoD is violated, the enforcer (112) acts based on the at least one policy file (114-1, 114-n); and
if a behavior (114b) of the at least one logged node (131c) is set to 'active', triggering termination of execution of the workflow instance (30-1, 30-n) or

if the behavior (114b) for the at least one node (131c) is set to 'passive' in the at least one policy file (114-1, 114-n), storing the at least one node (131c) for which SoD is violated in a log file (115).

2. Method according to claim 1, wherein checking SoD violation further comprises:

checking SoD violation by looking at history information of the workflow instance (30-1, 30-n) and verifying whether at least one logged node (131a) from one or more previous messages (131-1) corresponding to the workflow instance (30-1, 30-n) relate to the same content as the at least one logged node (131c).

3. Method according to any one of the preceding claims, wherein the at least one node (131c) is logged using a pair comprising a namespace and a nodename.

4. Method according to any one of the preceding claims, wherein the monitoring module (113) and the enforcer (112) are deployed in a workflow management system (111) executing the-workflow instance (30-1, 30-n).

5. Method according to any one of the preceding claims, wherein the monitoring module (113) is placed within a stack processing the message pipe as a handler.

6. Method according to any one of the preceding claims, wherein the monitoring module (113) and the enforcer (112) are placed on a server side (110) of a distributed architecture.

7. Computer program product comprising computer readable instructions, which when loaded and run in a computer and/or computer network system, causes the computer system and/or the computer network system to perform operations according to a method of any one of the preceding claims.

8. Computer system for dynamic separation of duties (SoD) during workflow execution, which ensures that workflow tasks are performed by different users based on available context information, the system comprising:

a monitoring module (113) operable to:

specify based on at least one policy file (114-1, 114-n) at least one node (131 c) to be logged from a message (131-2) in a message pipe of one or more messages exchanged when executing a workflow instance (30-1, 30-n), wherein the at least one logged node (131c) is specified in the policy file (114-1, 114-n) as possibly violating SoD; and
to pass information on the at least one logged node (131 c) to an enforcer (112);

the enforcer (112) operable to:

check SoD violation for the at least one logged node (131c);
act based on the at least one policy file (114-1, 114-n), if for the at least one logged node (131c) SoD is violated; and
trigger termination of execution of the workflow instance, if a behavior (114b) of the at least one logged node (131c) is set to 'active' or
store the at least one node (131c) for which SoD is violated in a log file (115), if the behavior (114b) for the at least one node (131c) is set to 'passive' in the at least one policy file (114-1, 114-n).

9. System according to claim 8, wherein the enforcer (112) is further operable to:

check SoD violation by looking at history information of the workflow instance (30-1, 30-n) and verifying whether at least one logged node (131a) from one or more previous messages (131-1) corresponding to the workflow instance (30-1, 30-n) relate to the same content as the at least one logged node (131c).

10. System according to any one of claims 8 to 9, wherein the at least one node (131c) is logged using a pair comprising a namespace and a nodename.

11. System according to any one of claims 8 to 10, wherein the monitoring module (113) and the enforcer (112) are deployed in a workflow management system (111) executing the workflow instance (30-1, 30-n).

**12.** System according to any one of claims 8 to 11, wherein the monitoring module (113) is placed within a stack processing the message pipe as a handler.

**13.** System according to any one of claims 8 to 12, wherein the monitoring module (113) and the enforcer (112) are placed on a server side (110) of a distributed architecture.

**Patentansprüche**

**1.** Verfahren zur dynamischen Funktionstrennung bzw. Separation of Duties (SoD) während der Ausführung eines Arbeitsablaufs bzw. Workflows, das sicherstellt, dass Arbeitsablauf- bzw. Workflowtasks bzw. -aufgaben von unterschiedlichen Benutzern basierend auf verfügbaren Kontextinformationen durchgeführt werden, wobei das Verfahren umfasst:

basierend auf zumindest einer Richtlinien- bzw. Policy-Datei (114-1, 114-n), Spezifizieren, an einem Überwachungsmodul (113), von zumindest einem Knoten (131c), der von bzw. aus einer Nachricht (131-2) in einer Nachrichten-Pipe einer oder mehrerer ausgetauschten Nachrichten zu protokollieren ist, wenn eine Workflow-Instanz (30-1, 30-n) ausgeführt wird, wobei der zumindest eine protokollierte Knoten (131c) in der Policy-Datei (114-1, 114-n) als möglicherweise SoD-gefährdend spezifiziert wird;
Weitergeben von Informationen über den zumindest einen protokollierten Knoten (131c) an einen Durchsetzer bzw. Enforcer (112);
Überprüfung der SoD-Gefährdung für den zumindest einen protokollierten Knoten (131c) an dem Enforcer (112);
wenn für den zumindest einen protokollierten Knoten (131c) SoD gefährdet ist, handelt der Enforcer (112) basierend auf der zumindest einen Policy-Datei (114-1, 114-n); und
wenn ein Verhalten (114b) des zumindest einen protokollierten Knotens (131c) als "aktiv" festgelegt ist, Auslösen der Beendigung der Ausführung der Workflow-Instanz (30-1, 30-n), oder
wenn das Verhalten (114b) für den zumindest einen Knoten (131c) in der zumindest einen Policy-Datei (114-1, 114-n) als "passiv" festgelegt ist, Speichern des zumindest einen Knotens (131c), für den SoD gefährdet ist, in einer Protokolldatei (115).

**2.** Verfahren nach Anspruch 1, wobei das Überprüfen der SoD-Gefährdung ferner umfasst:

Überprüfen der SoD-Gefährdung durch Betrachten von Verlaufsinformationen der Workflow-Instanz (30-1, 30-n) und Verifizieren, ob zumindest ein protokollierter Knoten (131a) aus einer oder mehreren vorherigen Nachrichten (131-1), die der Workflow-Instanz (30-1, 30-n) entsprechen, den gleichen Inhalt betrifft wie der zumindest eine protokollierte Knoten (131c).

**3.** Verfahren nach einem der vorhergehenden Ansprüche, wobei der zumindest eine Knoten (131c) unter Verwendung eines Paars bestehend aus Namensraum und Knotenname protokolliert wird.

**4.** Verfahren nach einem der vorhergehenden Ansprüche, wobei das Überwachungsmodul (113) und der Enforcer (112) in einem Arbeitsablauf- bzw. Workflow-Managementsystem (111) eingesetzt werden, das die Workflow-Instanz (30-1, 30-n) ausführt.

**5.** Verfahren nach einem der vorhergehenden Ansprüche, wobei das Überwachungsmodul (113) in einem Stapel bzw. Stack, der die Nachrichten-Pipe verarbeitet, als ein Bearbeiter bzw. Handler plaziert wird.

**6.** Verfahren nach einem der vorhergehenden Ansprüche, wobei das Überwachungsmodul (113) und der Enforcer (112) auf einer Server-Seite (110) einer verteilten Architektur plaziert werden.

**7.** Computerprogrammprodukt, umfassend computerlesbare Instruktionen, die, wenn sie auf einem Computer und/oder Computernetzwerksystem geladen sind und ausgeführt werden, das Computersystem und/oder das Computernetzwerksystem veranlassen, Operationen gemäß einem Verfahren nach einem der vorhergehenden Ansprüche durchzuführen.

**8.** Computersystem zur dynamischen Funktionstrennung bzw. Separation of Duties (SoD) während der Ausführung eines Arbeitsablaufs bzw. Workflows, das sicherstellt, dass Arbeitsablauf- bzw. Workflowtasks bzw. -aufgaben von unterschiedlichen Benutzern basierend auf verfügbaren Kontextinformationen durchgeführt werden, wobei das System umfasst:

ein Überwachungsmodul (113), das wirksam bzw. betriebsfähig ist, um:

basierend auf zumindest einer Richtlinien- bzw. Policy-Datei (114-1, 114-n) zumindest einen Knoten (131c) zu spezifizieren, der von bzw. aus einer Nachricht (131-2) in einer Nachrichten-Pipe einer oder mehrerer ausgetauschten Nachrichten zu protokollieren ist, wenn eine Workflow-Instanz (30-1, 30-n) ausgeführt wird, wobei der zumindest eine protokollierte Knoten (131c) in der Policy-Datei (114-1, 114-n) als möglicherweise SoD-gefährdend spezifiziert wird; und

Informationen über den zumindest einen protokollierten Knoten (131c) an einen Durchsetzer bzw. Enforcer (112) weiterzugeben;

wobei der Enforder (112) wirksam bzw. betriebsfähig ist, um:

die SoD-Gefährdung für den zumindest einen protokollierten Knoten (131c) zu überprüfen;
basierend auf der zumindest einen Policy-Datei (114-1, 114-n) zu handeln, wenn für den zumindest einen protokollierten Knoten (131c) SoD gefährdet ist; und
die Beendigung der Ausführung der Workflow-Instanz auszulösen, wenn ein Verhalten (114b) des zumindest einen protokollierten Knotens (131c) als "aktiv" festgelegt ist, oder
den zumindest einen Knoten (131c), für den SoD gefährdet ist, in einer Protokolldatei (115) zu speichern, wenn das Verhalten (114b) für den zumindest einen Knoten (131c) in der zumindest einen Policy-Datei (114-1, 114-n) als "passiv" festgelegt ist.

9. System nach Anspruch 8, wobei der Enforcer (112) ferner wirksam bzw. betriebsfähig ist, um:

die SoD-Gefährdung durch Betrachten von Verlaufsinformationen der Workflow-Instanz (30-1, 30-n) zu überprüfen und zu verifizieren, ob zumindest ein protokollierter Knoten (131 a) aus einer oder mehreren vorherigen Nachrichten (131-1), die der Workflow-Instanz (30-1, 30-n) entsprechen, den gleichen Inhalt betrifft wie der zumindest eine protokollierte Knoten (131c).

10. System nach einem der Ansprüche 8 bis 9, wobei der zumindest eine Knoten (131c) unter Verwendung eines Paars bestehend aus Namensraum und Knotenname protokolliert wird.

11. System nach einem der Ansprüche 8 bis 10, wobei das Überwachungsmodul (113) und der Enforcer (112) in einem Arbeitsablauf- bzw. Workflow-Managementsystem (111) eingesetzt werden, das die Workflow-Instanz (30-1, 30-n) ausführt.

12. System nach einem der Ansprüche 8 bis 11, wobei das Überwachungsmodul (113) in einem Stapel bzw. Stack, der die Nachrichten-Pipe verarbeitet, als ein Bearbeiter bzw. Handler plaziert ist.

13. System nach einem der Ansprüche 8 bis 12, wobei das Überwachungsmodul (113) und der Enforcer (112) auf einer Server-Seite (110) einer verteilten Architektur plaziert sind.

**Revendications**

1. Procédé implémenté par un ordinateur pour la séparation dynamique des fonctions (SoD) pendant l'exécution d'organigrammes, lequel assure que des tâches d'organigramme sont accomplies par des différents utilisateurs sur la base d'une information contextuelle disponible, le procédé comprenant :

sur la base d'au moins un fichier de police (114-1, 114-n), spécifier sur un module de monitorage (113) au moins un noeud (131c) qui doit être enregistré depuis un message (131-2) dans un canal de message d'un ou de plusieurs messages échangés pendant l'exécution d'une instance d'organigramme (30-1, 30-n), dans lequel le au moins un noeud enregistré (131c) est spécifié dans le fichier de police (114-1, 114-n) comme violation possible de la SoD ;
transférer une information sur le au moins un noeud enregistré (131c) vers un applicateur (112) ;
vérifier la violation de la SoD pour le au moins un noeud enregistré (131c) sur l'applicateur (112) ;
si la SoD est violée pour le au moins un noeud enregistré (131c), l'applicateur (112) agit sur la base du au moins un fichier de police (114-1, 114-n) ; et

si un comportement (114b) du au moins un noeud enregistré (131c) est ajusté sur le mode « actif », déclencher la terminaison de l'exécution de l'instance d'organigramme (30-1, 30-n) ou

si le comportement (114b) pour le au moins un noeud (131c) est ajusté sur le mode « passif » dans le au moins un fichier de police (114-1, 114-n), mémoriser le au moins un noeud (131c) pour lequel la SoD est violée dans un fichier d'enregistrement (115).

2.  Procédé selon la revendication 1, dans lequel la vérification de violation de la SoD comprend en outre :

    contrôler la violation de la SoD par la consultation de l'instance d'organigramme (30-1, 30-n) sur l'information d'historique et vérifier si au moins un noeud enregistré (131a) depuis un ou plusieurs messages précédents (131-1) qui correspondent à l'instance d'organigramme (30-1, 30-n) relate du même contenu que le au moins un noeud enregistré (131c).

3.  Procédé selon l'une quelconque des revendications précédentes, dans lequel le au moins un noeud (131c) est enregistré en utilisant une paire d'éléments qui comprend un espace de nom et un nom de noeud.

4.  Procédé selon l'une quelconque des revendications précédentes, dans lequel le module de monitorage (113) et l'applicateur (112) sont déployés dans un système de gestion d'organigrammes (111), qui exécute l'instance d'organigramme (30-1, 30-n).

5.  Procédé selon l'une quelconque des revendications précédentes, dans lequel le module de monitorage (113) est placé à l'intérieur d'une pile qui traite le canal de message comme un gestionnaire.

6.  Procédé selon l'une quelconque des revendications précédentes, dans lequel le module de monitorage (113) et l'applicateur (112) sont placés sur un côté de serveur (110) d'une architecture distribuée.

7.  Produit de programme d'ordinateur comprenant des instructions lisibles par un ordinateur, qui, lorsqu'elles sont chargées et tournent dans un système d'ordinateurs et/ou dans un système de réseau d'ordinateurs, provoquent que le système d'ordinateurs et/ou le système de réseau d'ordinateurs accomplissent des opérations conformément à un procédé selon l'une quelconque des revendications précédentes.

8.  Système d'ordinateurs pour la séparation dynamique d'obligations (SoD) pendant l'exécution d'organigrammes, lequel assure que des tâches d'organigramme sont accomplies par des différents utilisateurs sur la base d'une information contextuelle disponible, le système comprenant :

    un module de monitorage (113) opérable pour :

    spécifier, sur la base d'au moins un fichier de police (114-1, 114-n), au moins un noeud (131c) qui doit être enregistré depuis un message (131-2) dans un canal de message d'un ou de plusieurs messages échangés pendant l'exécution d'une instance d'organigramme (30-1, 30-n), dans lequel le au moins un noeud enregistré (131c) est spécifié dans le fichier de police (114-1, 114-n) comme violation possible de la SoD ; et

    transférer une information sur le au moins un noeud enregistré (131c) vers un applicateur (112) ;
    l'applicateur (112) étant opérable pour ;
    vérifier la violation de la SoD pour le au moins un noeud enregistré (131c) ;
    agir sur la base du au moins un fichier de police (114-1, 114-n) si la SoD est violée pour le au moins un noeud enregistré (131c) ; et
    déclencher la terminaison de l'exécution de l'instance d'organigramme si un comportement (114b) du au moins un noeud enregistré (131c) est ajusté sur le mode « actif », ou
    mémoriser le au moins un noeud enregistré (131c) pour lequel la SoD est violée dans un fichier d'enregistrement (115) si le comportement (114b) pour le au moins un noeud enregistré (131c) est ajusté sur le mode « passif ».

9.  Système selon la revendication 8, dans lequel l'applicateur (112) est en outre opérable pour :

    contrôler la violation de la SoD par la consultation de l'instance d'organigramme (30-1, 30-n) sur l'information d'historique et vérifier si le au moins un noeud enregistré (131a) depuis un ou plusieurs messages précédents (131-1) qui correspondent à l'instance d'organigramme (30-1, 30-n) relate du même contenu que le au moins un noeud enregistré (131c).

10. Système selon l'une quelconque des revendications 8 à 9, dans lequel le au moins un noeud (131c) est enregistré en utilisant une paire d'éléments qui comprend un espace de nom et un nom de noeud.

11. Système selon l'une quelconque des revendications 8 à 10, dans lequel le module de monitorage (113) et l'applicateur (112) sont déployés dans un système de gestion d'organigrammes (111), qui exécute l'instance d'organigramme (30-1, 30-n).

12. Système selon l'une quelconque des revendications 8 à 11, dans lequel le module de monitorage (113) est placé à l'intérieur d'une pile qui traite le canal de message comme un gestionnaire.

13. Système selon l'une quelconque des revendications 8 à 12, dans lequel le module de monitorage (113) et l'applicateur (112) sont placés sur un côté de serveur (110) d'une architecture distribuée.

Figure 1

Figure 2

Figure 3

Figure 4

```
# An example of DSoD policy file. The syntax is as follows:       |——114-1
#
# logNodeList=namespace1|nodeName1 namespace2|nodeName2 ...
# behavior="active" or "passive"
logNodeList=http://ws1.com|username http://ws2.com|username
behavior=active
```

114a

114b

Figure 5

131-1

```
<soapenv:Envelope xmlns:wsa="http://www.w3.org/2005/08/addressing">
  <soapenv:Header>
    <wsa:To>http://host/active bpel/services/ClientProcessService</wsa:To>
    <wsa:ReplyTo>
        <wsa:Address>http://www.w3.org/2005/08/addressing/none</wsa:Address>
    </wsa:ReplyTo>
    <wsa:MessageID>urn:uuid:A5111EB4B206E9B84E1203668806474</wsa:MessageID>
    <wsa:Action>""</wsa:Action>
  </soapenv:Header>
  <soapenv:Body>                                            131b
    <ns1:issueLoanOffer xmlns:ns1="http://ws1.com">
        <ns1:clientData>
            <ns1:clientSSN>RSDNLL60D58Z139E</ns1:clientSSN>
        </ns1:clientData>
        <ns1:employeeData>
            <ns1:password>qwerty123</ns1:password>
            <ns1:username>Piter Pan</ns1:username>
        </ns1:employeeData>
        <ns1:loanAmount>100000</ns1:loanAmount>
        <ns1:loanType>2</ns1:loanType>
    </ns1:issueLoanOffer>
  </soapenv:Body>
</soapenv:Envelope>
```

131a

Figure 6

131-2

```
<soapenv:Envelope xmlns:wsa="http://www.w3.org/2005/08/addressing">
  <soapenv:Header>
    <wsa:To>http://host/active-
bpel/services/LoanStorageProcessService</wsa:To>
                    <wsa:ReplyTo>

<wsa:Address>http://www.w3.org/2005/08/addressing/none</wsa:Address>
    </wsa:ReplyTo>

<wsa:MessageID>urn:uuid:B3849BED765141467E1204535855670</wsa:MessageID>
    <wsa:Action>&quot;&quot;</wsa:Action>
  </soapenv:Header>
  <soapenv:Body>                              131d
    <ns1:LoanReleased xmlns:ns1="http://ws2.com">
      <ns1:LoanID>83</ns1:LoanID>
      <ns1:accepted>true</ns1:accepted>
      <ns1:employeeData>
        <ns1:password>qwerty123</ns1:password>
        <ns1:username>Piter Pan</ns1:username>       131c
      </ns1:employeeData>
    </ns1:LoanReleased>
  </soapenv:Body>
</soapenv:Envelope>
```

Figure 7

100

110

| User Application | Client API | Handlers | Transport Sender | SOAP | Transport Receiver | Handlers | Message Receiver | Web Service Business Logic |

210   220   230   240   290   250   260   270   280

Figure 8

```
<module name="secureLogging"
class="com.sap.crnce.serenity.patterns.security.a2.logging.SecureLogg
ingModule">
    <InFlow>
        <handler name="InFlowLogHandler"
class="com.sap.crnce.serenity.patterns.security.a2.logging.SecureLogH
andler">
            <order phase="secureLoggingPhase"/>
        </handler>
    </InFlow>

    <OutFlow>
        <handler name="OutFlowLogHandler"
class="com.sap.crnce.serenity.patterns.security.a2.logging.SecureLogH
andler">
            <order phase="secureLoggingPhase"/>
        </handler>
    </OutFlow>

    <OutFaultFlow>
        <handler name="FaultOutFlowLogHandler"
class="com.sap.crnce.serenity.patterns.security.a2.logging.SecureLogH
andler">
            <order phase="secureLoggingPhase"/>
        </handler>
    </OutFaultFlow>

    <InFaultFlow>
        <handler name="FaultInFlowLogHandler"
class="com.sap.crnce.serenity.patterns.security.a2.logging.SecureLogH
andler">
            <order phase="secureLoggingPhase"/>
        </handler>
    </InFaultFlow>
</module>
```

Figure 9

```
/*
 * @(#)SecureLogHandler.java       1.00 Jan 24, 2006
 *
 * <copyright>
 * </copyright>
 */
package com.sap.crnce.serenity.patterns.security.a2.logging;

import java.io.IOException;
import java.io.InputStream;
import java.util.Properties;

import org.apache.axiom.om.OMElement;
import org.apache.axiom.soap.SOAPEnvelope;
import org.apache.axis2.AxisFault;
import org.apache.axis2.context.MessageContext;
```

Figure 10

```
import org.apache.axis2.description.AxisService;
import org.apache.axis2.engine.Handler;
import org.apache.axis2.handlers.AbstractHandler;
import org.apache.axis2.util.XMLUtils;
import org.apache.commons.logging.Log;
import org.apache.commons.logging.LogFactory;
import org.apache.rampart.util.Axis2Util;
import org.w3c.dom.Document;
import org.w3c.dom.Element;
import org.w3c.dom.Node;
import org.w3c.dom.NodeList;

/**
 * An Axi2 Handler for intercepting and logging soap messages.
 *
 * @version 1.00 $Date: Jan 24, 2008
 * @author Joana.da.Trindade@sap.com (I047445)
 */
public class SecureLogHandler extends AbstractHandler
    implements Handler {

    /** The logger object for this class */
    private static final Log log =
        LogFactory.getLog(SecureLogHandler.class);

    private static final String newLine =
        System.getProperty("line.separator");

    /** Name of this handler */
    private String name;

    @Override
    public String getName() {
      return name;
    }

    /**
     * Invoke method. It is activated each time a soap message
     * is sent or received, and it acts upon the "logging"
     * phase of Axis2. A service requiring logging should have
     * a "seclog.properties" file in its archive.
     *
     * @param msgContext
     *                current message being processed by
     *                the Axis2 engine.
     */
    public InvocationResponse invoke(MessageContext msgContext)
            throws AxisFault {
      Properties secLogProps;

      // retrieve current service
      AxisService service = msgContext.getAxisService();

      try {
          secLogProps = getLoggingProperties(service);
      }
```

Figure 10 c'ed

```
      catch (IOException e) {
          return InvocationResponse.CONTINUE;
      }
      // logging general info from the message
      log(msgContext.getIncomingTransportName() + " request from "
              + msgContext.getFrom() + " to " + msgContext.getTo());
      log("action performed -> " + msgContext.getSoapAction());


      // retrieve soap message
      SOAPEnvelope soapEnv = msgContext.getEnvelope();
      try {
          // specifying the (local) names of the nodes to log
          String[] logNodeArray = secLogProps
                  .getProperty("logNodeList").split("\\s");

          if ((logNodeArray == null) || (logNodeArray.length == 0)) {
            return InvocationResponse.CONTINUE;
          }


          // retrieve DOM document (we need it to retrieve the
          // nodes by tag name)
          Document xmlDoc = Axis2Util.getDocumentFromSOAPEnvelope(
                  soapEnv,false);


          // for each space-seperated node name, we retrieve a
          // DOM NodeList
          for (String logNode : logNodeArray) {
            String[] nsAndTag = logNode.split("|");
            NodeList nodeList = xmlDoc
                  .getElementsByTagNameNS(nsAndTag[0], nsAndTag[1]);


            if (nodeList != null) {
                for (int i = 0; i < nodeList.getLength(); i++) {
                  /*
                  * Now we log the content of each node
                  * (xml subtree, not necessarily a leaf) with
                  * the specified name. however, DOM does not have
                  * a direct way of outputting the content. It's
                  * either using a TransformerFactory like in:
                  * http://snippets.dzone.com/posts/show/4011
                  *
                  * or creating an axiom element from the node:
                  */
                  Node node = nodeList.item(i);
                  OMElement omElmnt = XMLUtils.toOM((Element) node);


                  log("content of node \"" + logNode
                      + "\":" + newline + omElmnt.toString());
                }
            }
          }
      } catch (Exception e) {
          e.printStackTrace();
      }
      return InvocationResponse.CONTINUE;
  }
```

Figure 10 c'ed

```
/**
 * Called when this handler is revoked.
 */
public void revoke(MessageContext msgContext) {
  return;
}

/**
 * Set name for this handler.
 */
public void setName(String name) {
  this.name = name;
}

/**
 * Return the seclog.properties file for the specified service.
 *
 * @param service
 *                an Axis2 web service
 */
private Properties getLoggingProperties(AxisService service)
      throws IOException {
  Properties secLogProps = null;

  // retrieve class loader for the service
  ClassLoader loader = service.getClassLoader();

  // retrieve inputstream for log properties
  InputStream is = loader
      .getResourceAsStream("seclog.properties");

  if (is != null) {
      secLogProps = new Properties();
      secLogProps.load(is);
  } else {
      throw new IOException(
          "Could not load seclog.properties for service '"
              + service.getName() + "'");
  }

  return secLogProps;
}

/**
 * Log a message. Calls the logging object.
 *
 * @param message
 *                a message
 */
private void log(String message) {
  log.info("SecureLoggingModule: " + message);
}
```

Figure 10 c'ed

EP 2 133 831 B1

```
/*
 * @(#) SecureLoggingModule.java      1.00 Jan 24, 2008
 *
 * <copyright>
 * </copyright>
 */
package com.sap.crnce.serenity.patterns.security.a2.logging;

import org.apache.axis2.AxisFault;
import org.apache.axis2.context.ConfigurationContext;
import org.apache.axis2.description.AxisDescription;
import org.apache.axis2.description.AxisModule;
import org.apache.axis2.modules.Module;
import org.apache.neethi.Assertion;
import org.apache.neethi.Policy;


/**
 * An Axis2 module for intercepting and logging messages.
 *
 * @version 1.00 $Date: Jan 24, 2008
 * @author Joana.da.Trindade@sap.com (I047445)
 */
public class SecureLoggingModule implements Module {

    // initialize the module
    public void init(ConfigurationContext configContext,
            AxisModule module)
            throws AxisFault {
    }

    public void engageNotify(AxisDescription axisDescription)
            throws AxisFault {
    }

    // shutdown the module
    public void shutdown(ConfigurationContext configurationContext)
            throws AxisFault {
    }

    public String[] getPolicyNamespaces() {
      return null;
    }

    public void applyPolicy(Policy policy,
            AxisDescription axisDescription)
            throws AxisFault {
    }

    public boolean canSupportAssertion(Assertion assertion) {
      return true;
    }
}
```

Figure 11

30

Figure 12

**EP 2 133 831 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7340469 B1
- US 20080059474 A1